# FASCICULE DE BREVET EUROPEEN

(11) **EP 3 787 933 B1**
(45) Date de publication et mention de la délivrance du brevet: **24.08.2022**
(21) Numéro de dépôt: 19722825.7
(22) Date de dépôt: 29.04.2019
(51) Int. Cl.: B60R 13/02, B60R 13/04

(54) **PIÈCE DE CARROSSERIE À RELIEFS INTERNES PEINTS**
KAROSSERIETEIL MIT LACKIERTEN INTERNEN ERHÖHTEN BEREICHEN
BODYWORK PART WITH PAINTED INTERNAL RAISED AREAS

(30) Priorité: 30.04.2018 FR 1800395
(43) Date de publication de la demande: 10.03.2021
(73) Titulaire: Compagnie Plastic Omnium, 69007 Lyon (FR)
(72) Inventeur: STABLO, Frédéric, 38390 Porcieu Amblagnieu (FR)
(74) Mandataire: LLR
(86) Numéro de dépôt international: PCT/EP2019/060978
(87) Numéro de publication internationale: WO 2019/211251

(56) Documents cités:
- US-A1- 2004 125 023
- US-A1- 2014 093 665

## Description

L'invention concerne les pièces de carrosserie pour véhicule automobile. Notamment les pièces comportant des éléments ayant une apparence en trois dimensions.

US 2014/093665 divulgue un pièce de carrosserie pour un véhicule automobile, comprend un élément transparent comprenant une première surface destinée à être tournée vers l'extérieur du véhicule, et une seconde surface opposée à la première surface, ladite seconde surface comprend au moins une zone en relief et une zone non en relief; au moins un premier revêtement recouvrant au moins en partie seulement la zone en relief de l'élément transparent; au moins un second revêtement recouvrant au moins en partie la zone non en relief; le premier revêtement étant au moins en partie absent de la zone en relief et recouvrant la zone non en relief.

De nombreux éléments en relief formant saillie de pièces de carrosserie sont également souvent présents sur celles-ci, tels des logos du constructeur ou des inscriptions.

Ces éléments présentent l'inconvénient d'être exposés aux dégradations dues à des éléments externes, au véhicule. Une mise en vernis peut s'avérer nécessaire afin de protéger ces éléments de ces dégradations.

Ils sont également difficiles à nettoyer, car des salissures ont tendance à venir se coincer dans les reliefs.

Enfin, des éléments en relief trop saillants sont interdits pour des raisons de sécurité, risquant de blesser des piétons en cas de choc.

Ces éléments en relief forment une partie indispensable de l'esthétique générale du véhicule.

Pour pallier à ces inconvénients, il existe des feuilles adhésives que l'on colle sur les pièces de carrosserie pour donner un effet de relief à certaines parties de la pièce de carrosserie afin d'améliorer son aspect esthétique général. Ces feuilles adhésives peuvent présenter des motifs avec différentes couleurs.

Ces feuilles adhésives présentent l'inconvénient d'être très fragiles et difficiles à poser correctement, sans bulle, pli et sur le bon emplacement. Les motifs en relief ne sont pas protégés du milieu extérieur. Par exemple, lors d'un nettoyage, notamment en utilisant un jet d'eau à haute pression, cet adhésif peut se décoller de la pièce de carrosserie.

De même, la maintenance d'une telle pièce adhésive rapportée sur la pièce de carrosserie est très compliquée, car il faut décoller l'adhésif, qui peut abimer la surface sur laquelle il était déposé, et ensuite préparer cette surface pour la pose d'un nouvel adhésif. Ceci est d'autant plus problématique que les feuilles adhésives vieillissent, par exemple en changeant de couleur, ou en se déformant et ne peuvent généralement pas durer toute la durée de vie du véhicule sans être changées.

L'invention a pour but de proposer une pièce de carrosserie ayant un aspect en relief et surmontant les inconvénients précités.

L'invention a donc pour objet une pièce de carrosserie pour un véhicule automobile, qui comprend un élément transparent ou translucide comprenant une première surface destinée à être tournée vers l'extérieur du véhicule, et une seconde surface opposée à la première surface, ladite seconde surface comprenant au moins une zone en relief et une zone non en relief. La pièce de carrosserie comprend également au moins un premier revêtement étant au moins en partie absent de la zone en relief et recouvrant la zone non en relief de l'élément transparent ou translucide, et au moins un second revêtement recouvrant le premier revêtement et la zone en relief, le second revêtement ayant une couleur différente de la couleur du premier revêtement.

De cette manière, la zone en relief ne forme pas la surface externe de la pièce de carrosserie. Le relief visible de l'extérieur est formé à la fois par la deuxième surface de l'élément transparent et par les revêtements la recouvrant.

Ainsi, la pièce de carrosserie présente des reliefs qui sont protégés du milieu extérieur. Ils sont ainsi plus solides, ce qui permet à la pièce de carrosserie de garder un aspect extérieur convenable plus longtemps.

De plus, la pièce est bien plus facile à nettoyer qu'une pièce avec un relief sur l'extérieur. En effet, des saletés peuvent se nicher dans les recoins de reliefs externes d'une pièce avec un relief sur l'extérieur, ce qui rend le nettoyage très difficile. Dans la pièce de carrosserie selon l'invention, le relief n'étant pas situé sur la surface externe, il ne se salit pas. C'est la surface externe de l'élément de transparence, qui peut avoir toute une variété de forme et d'états de surface, qui est exposé aux salissures.

Enfin, les reliefs n'étant pas situés sur l'extérieur de la pièce, ceux-ci ne forment pas d'éléments saillants qui seraient gênant en termes de sécurité lors d'un contact avec un piéton.

La pièce de carrosserie selon l'invention peut optionnellement comprendre une ou plusieurs des caractéristiques suivantes :
- au moins un des premier revêtement et deuxième revêtement est une couche de peinture ;
- les premier revêtement et deuxième revêtement sont des couches de peinture ;
- le premier revêtement est encapsulé entre le second revêtement et la seconde surface de l'élément transparent ou translucide ;
- le premier revêtement recouvre intégralement la zone non en relief ;
- la pièce de carrosserie comprend en outre un corps principal en matière plastique dans lequel est surmoulé l'élément transparent ou translucide.

L'invention a également pour objet une face avant de véhicule automobile qui comporte une pièce de carrosserie telle que décrite précédemment.

L'invention a également pour objet un véhicule automobile équipé d'une pièce de carrosserie telle que décrite précédemment.

L'invention a également pour objet un procédé de fabrication d'une pièce de carrosserie de véhicule automobile telle que décrite précédemment qui comprend les étapes de :
- moulage par injection de l'élément transparent ou translucide ;
- pose du premier revêtement sur l'intégralité de la seconde surface de l'élément transparent ou translucide ;
- retrait d'une partie du premier revêtement située sur la zone en relief ;
- pose du second revêtement sur la zone en relief et le premier revêtement.

Le procédé de fabrication selon l'invention peut optionnellement comprendre une ou plusieurs des caractéristiques suivantes :
- la pose du premier revêtement est réalisée par pulvérisation d'une couche de peinture sur la seconde surface de l'élément transparent ou translucide ;
- le retrait d'une partie du premier revêtement est réalisé par grattage laser ;
- le procédé de fabrication comprend en outre les étapes de : retrait d'une partie des couches de peinture composant le premier revêtement et le second revêtement de la pièce de carrosserie par grattage laser ; pose d'un troisième revêtement recouvrant des zones où l'on a retiré une partie de des couches de peinture composant les premier revêtement second revêtement.

Dans ce qui suit, les termes tels que « axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles selon les repères représentés sur les figures.

Nous allons maintenant présenter un mode de réalisation de l'invention donné à titre d'exemple non limitatif et à l'appui des figures annexées dans lesquelles :
- la figure 1 est une vue en coupe d'une pièce de carrosserie selon l'invention lors d'une étape de sa fabrication ;
- la figure 2 est une vue en coupe de la pièce de carrosserie selon l'invention lors d'une autre étape sa fabrication.
- la figure 3 est une vue en coupe de la pièce de carrosserie selon l'invention, lors d'une autre étape de sa fabrication ;
- la figure 4 est une vue en coupe d'une pièce de carrosserie selon l'invention.

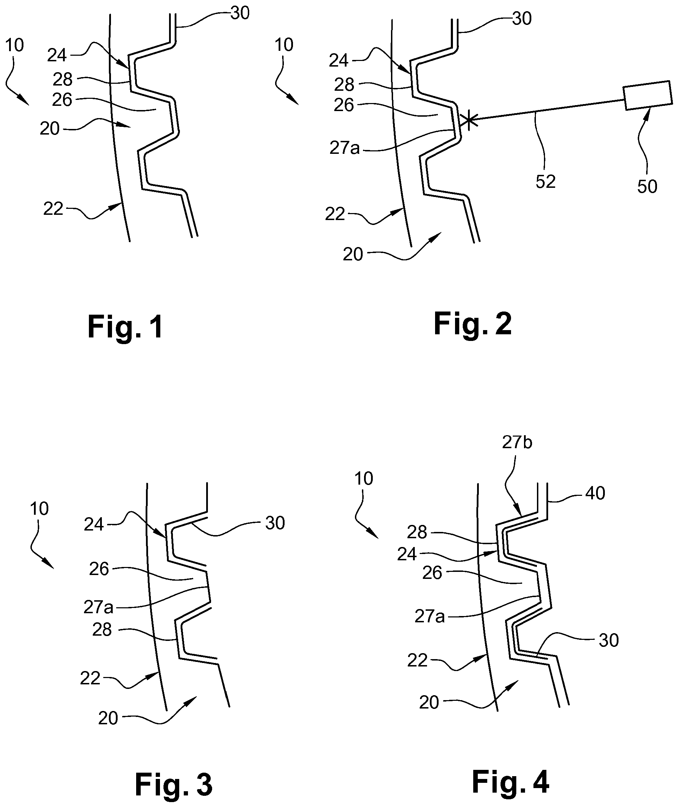

On se réfère maintenant à la figure 4 qui est une section partielle d'une pièce de carrosserie selon l'invention, selon un plan normal à l'axe transversal Y du véhicule lorsque la pièce est montée sur un véhicule automobile.

Cette pièce de carrosserie comprend un élément transparent ou translucide 20. Cet élément 20 est ici composé de matière plastique. Cet élément est de manière générale composé de matière thermoplastique, de préférence du polycarbonate ou du polyméthacrylate de méthyle, ou encore du polypropylène ou bien à base de polyoléfine amorphe tels que les cyclo-oléfines-copolymères (COC) et cyclo-oléfines-polymères (COP). Cette matière plastique est transparente ou translucide. Par transparente on entend une matière transmettant la lumière par réfraction et au travers de laquelle des objets sont visibles avec netteté. Par translucide, on entend une matière transmettant la lumière de manière diffuse et au travers de laquelle des objets apparaissent flous.

Cet élément 20 comprend une première surface 22 qui est destinée à être tournée vers l'extérieur du véhicule, lorsque la pièce 10 est montée sur un véhicule automobile. Cette première surface 22 est ici légèrement incurvée, mais peut tout à fait, de manière alternative, être plane ou de tout autre forme. La première surface 22 est sensiblement lisse, c'est-à-dire que cette surface 22 est sans aspérité. De manière alternative, elle peut être légèrement rugueuse, c'est-à-dire présenter de petites aspérités. Le fait que cette surface 22 soit lisse, ou ne soit que légèrement rugueuse, permet de faciliter le nettoyage de salissures déposées sur celle-ci, notamment de la boue, de la poussière, ou des insectes écrasés sur celle-ci. La rugosité peut aussi apporter un effet de texture et/ou un effet diffusant de la lumière.

L'élément de transparence comprend une deuxième surface 24, qui est opposée à la première surface 22. Cette deuxième surface 24 comprend ici plusieurs zones en relief 26. Par zone en relief, on entend une zone qui fait saillie d'une surface. Ici, les zones en relief 26 font saillie de la deuxième surface 24. Cette deuxième surface 24 comprend également des zones non en relief 28 qui sont au niveau de la surface 24. Ici, les reliefs sur l'élément transparent ou translucide 20 présentent un profil en forme de créneau, mais peuvent toutefois prendre toute sorte de formes, comme nous le verrons plus tard.

Un premier revêtement 30 recouvre les zones non en relief 28. Ce revêtement n'est en partie pas présent sur les zones en relief 26 de l'élément 20. Dans ce mode de réalisation de l'invention, le premier revêtement 30 est complètement absent de parties sommitales 27a de chaque zone en relief 26. De manière alternative, ce premier revêtement 30 peut recouvrir certaines zones en relief 26, sans les recouvrir toutes. Il peut aussi ne recouvrir que les zones non en relief 28 sans recouvrir des flancs 27b des zones en relief 26.

Le premier revêtement 30 est opaque. Par opaque on entend qu'il ne laisse pas ou peu passer la lumière. Ce premier revêtement 30 est d'une couleur qui peut être toute sorte de couleur qui aura été choisie par l'homme du métier.

Un second revêtement 40 recouvre la zone en relief 26. Ainsi, il recouvre des zones de la deuxième surface 40 qui ne sont pas recouvertes par le premier revêtement 30. Le second revêtement 40 recouvre également le premier revêtement 30.

Le second revêtement 40 est, comme le premier revêtement, opaque. Ce deuxième revêtement est d'une deuxième couleur qui est différente de la couleur du premier revêtement 30. Par couleur différente, on entend une couleur qui peut être distinguée à l'œil nu de la couleur du premier revêtement 30.

Du fait de la transparence de l'élément transparent ou translucide 20, les premiers et deuxièmes revêtements 30, 40 sont visibles à travers l'élément 20. La pièce de carrosserie 10 laisse apparaître, lorsqu'elle est observée par la première surface 22, les zones en relief 26 ainsi que les zones non en relief 28, et les revêtements 30, 40 qui les recouvrent. Ces reliefs apparaissent de plus clairement en raison de la différence de couleur visible entre les zones en relief 26 et les zone non en relief 28. On voit donc, derrière la première surface 22, qui est lisse ou peu rugueuse, des reliefs en couleur, ce qui confère à la pièce un effet en trois dimensions. Les reliefs 26 et 28 sont de plus au cœur de la pièce de carrosserie 10 et sont donc protégés des salissures et des dégradations dues à des éléments extérieurs venant frapper la pièce de carrosserie 10. On a donc une pièce de carrosserie 10 ayant une première surface 22 vers l'extérieur qui est facile à nettoyer du fait de sa faible rugosité, et des reliefs qui sont protégés.

Le premier revêtement 30 est ici constitué d'une couche de peinture qui recouvre les zones non en relief 28 de l'élément 20, ainsi que les flancs 27b de la zone en relief 26. La peinture permet d'avoir une couverture uniforme des zones peintes. Le deuxième revêtement 40 est lui aussi constitué d'une couche de peinture. De manière alternative, un des revêtements 30, 40 peut être composé d'une couche de matière plastique, par exemple surmoulée sur l'élément transparent ou translucide 20. Ces exemples ne sont pas limitatifs et l'homme du métier peut sélectionner toute sorte de matière différents pour ces revêtements.

Dans le mode de réalisation présenté, le premier revêtement 30 est encapsulé entre la seconde surface 24 de l'élément transparent ou translucide 20 et le second revêtement 40. De cette façon, la seconde surface 24 est complètement recouverte par les deux revêtements 30, 40. On a donc une absence d'interstices sur cette seconde surface 24, ce qui permet d'avoir l'effet en trois dimensions pour un observateur extérieur sur toute la pièce de carrosserie 10.

On peut noter qu'il est également possible que le second revêtement ne recouvre que partiellement la seconde surface 24 de la pièce de carrosserie 10 et le premier revêtement 30. Dans ce cas, il est possible que la pièce 10 comprenne un troisième revêtement recouvrant au moins en partie, ou bien totalement la seconde surface 24 de l'élément 20 par dessus les premier et second revêtements 30, 40. On peut même, selon le même principe, avoir 4, 5, 6 7 8 ou 9 revêtements différents recouvrant la seconde surface 24 de l'élément 20.

La combinaison des zones en relief 26 et non en relief 28 avec les revêtements les recouvrant permet de créer toute sortes de motifs et de formes en trois dimensions dans la pièce de carrosserie 10 facilement. On peut par exemple représenter le logo du constructeur dans la pièce 10.

La pièce de carrosserie 10 est destinée à une face avant de véhicule automobile. Plus particulièrement, elle est particulièrement adaptée pour former la calandre de cette face avant du véhicule, en raison des reliefs apparents, de sa solidité, et de sa facilité de nettoyage. Toutefois, une pièce de carrosserie selon l'invention peut être disposée en toute sorte de parties du véhicule. Elle peut être disposée sur un de ses flancs, sur une aile, en partie arrière, ou sur toute autre partie de la carrosserie, par exemple en remplacement d'une baguette, d'un logo du constructeur ou d'une grille d'aération.

Nous allons maintenant décrire le procédé de fabrication de la pièce de carrosserie 10 à l'appui des figures 1 à 4.

La première étape de la fabrication consiste à mouler par injection l'élément transparent ou translucide 20. Le moulage par injection permet d'obtenir toute une variété de formes différentes pour cet élément 10, et de créer les zones en relief 26 et les zones non en relief 28, selon les formes désirées.

Ensuite, on pose le premier revêtement 30 sur l'intégralité de la seconde surface 24 de l'élément transparent ou translucide 20. Ce premier revêtement recouvre à la fin de cette étape du procédé toute la seconde surface 24, comme le montre la figure 1.

Puis, on retire en partie le premier revêtement 30 par grattage à l'aide d'un laser 50 projetant un faisceau 52 sur la zone du premier revêtement 30 à retirer. Cette étape est illustrée par la figure 2. L'utilisation d'un laser 50 est particulièrement avantageuse car elle permet un retrait rapide et avec précision du premier revêtement 30. L'utilisation d'un laser 50 peut aussi permettre d'ajouter une texturation de la zone du premier revêtement 30 sur laquelle on retire ce premier revêtement 30.

De manière alternative, ce retrait peut être effectué mécaniquement, par exemple par abrasion de la zone à retirer.

La figure 3 présente la pièce de carrosserie 10 à la fin de l'étape de retrait. On voit sur cette figure que le premier revêtement ne recouvre plus intégralement la seconde surface 24 de l'élément 20. Plus particulièrement, le premier revêtement ne recouvre plus des parties sommitales 27a de l'élément transparent ou translucide 20.

Enfin, on pose le second revêtement 40 de manière à ce qu'il recouvre à la fois la zone en relief 26 et le premier revêtement 30. A la fin de cette étape, on obtient la pièce de carrosserie 10 représentée en figure 4.

Ce procédé de fabrication est particulièrement simple et rapide à mettre en œuvre et permet d'avoir des éléments en trois dimensions à distance de la première surface 22 de l'élément transparent ou translucide 20.

De manière préférentielle, le premier revêtement 30 et le second revêtement 40 comprennent chacun une couche de peinture qui est pulvérisée sur l'élément 20.

Avec cette pulvérisation, on obtient un premier revêtement 30 et un second revêtement 40 qui sont chacun une couche de peinture, et qui recouvrent de manière uniforme la seconde surface 24, et le premier revêtement 30.

Il est possible ensuite de recouvrir le second revêtement d'un ou plusieurs revêtements additionnels, qui peuvent eux aussi être grattés (par laser ou pas) comme l'a été le second revêtement précédemment. La superposition de tous ces revêtements successifs permet de créer des motifs précis et en trois dimensions à l'intérieur de la pièce.

L'invention n'est pas limitée aux modes de réalisation présentés et d'autres modes de réalisation apparaîtront clairement à l'homme du métier.

On peut par exemple avoir une pièce comprenant un corps principal en matière plastique dans lequel est surmoulé l'élément transparent ou translucide.

### Nomenclature :

10 : pièce de carrosserie
20 : élément transparent ou translucide
22 : première surface de l'élément transparent ou translucide
24 : seconde surface de l'élément transparent ou translucide
26 : zone en relief
27a : partie sommitale de la zone en relief
27b : flancs de la zone en relief
28 : zone non en relief
30 : premier revêtement
40 : second revêtement
50 : laser
52 : faisceau du laser

## Revendications

1. Pièce de carrosserie (10) pour un véhicule automobile, comprenant :
- un élément transparent ou translucide (20) comprenant une première surface (22) destinée à être tournée vers l'extérieur du véhicule, et une seconde surface (24) opposée à la première surface (22), ladite seconde surface (24) comprenant au moins une zone en relief (26) et une zone non en relief (28) ;
- au moins un premier revêtement (30) étant au moins en partie absent de la zone en relief (26) et recouvrant la zone non en relief (28) de l'élément transparent ou translucide (20) ; **caractérisée en ce qu'** elle comprend :
- au moins un second revêtement (40) recouvrant le premier revêtement (30) et la zone en relief (26), le second revêtement (40) ayant une couleur différente de la couleur du premier revêtement (30).

2. Pièce de carrosserie (10) selon la revendication précédente dans laquelle au moins un des premier revêtement (30) et deuxième revêtement (40) est une couche de peinture.

3. Pièce de carrosserie selon la revendication précédente dans laquelle les premier revêtement (30) et deuxième revêtement (40) sont des couches de peinture.

4. Pièce de carrosserie (10) selon l'une des revendications précédentes dans laquelle le premier revêtement (30) est encapsulé entre le second revêtement (40) et la seconde surface (24) de l'élément transparent ou translucide (20).

5. Pièce de carrosserie (10) selon l'une des revendications précédentes dans laquelle le premier revêtement recouvre intégralement la zone non en relief (28).

6. Pièce de carrosserie (10) selon l'une des revendications précédentes qui comprend en outre un corps principal en matière plastique dans lequel est surmoulé l'élément transparent ou translucide (20).

7. Face avant de véhicule automobile qui comporte une pièce de carrosserie (10) selon l'une des revendications précédentes.

8. Véhicule automobile équipé d'une pièce de carrosserie (10) selon l'une des revendications 1 à 6.

9. Procédé de fabrication d'une pièce de carrosserie de véhicule automobile selon l'une des revendications 1 à 6 **caractérisé en ce qu'**il comprend les étapes de :
- moulage par injection de l'élément transparent ou translucide (20) ;
- pose du premier revêtement (30) sur l'intégralité de la seconde surface (24) de l'élément transparent ou translucide (20) ;
- retrait d'une partie du premier revêtement (30) située sur la zone en relief (26) ;
- pose du second revêtement (40) sur la zone en relief (26) et le premier revêtement (30).

10. Procédé de fabrication selon la revendication précédente dans lequel la pose du premier revêtement (30) est réalisée par pulvérisation d'une couche de peinture sur la seconde surface (24) de l'élément transparent ou translucide (20).

11. Procédé de fabrication selon la revendication précédente dans lequel le retrait d'une partie du premier revêtement est réalisé par grattage laser.

12. Procédé de fabrication selon la revendication précédente qui comprend en outre les étapes de :
- retrait d'une partie des couches de peinture composant le premier revêtement (30) et le second revêtement (40) de la pièce de carrosserie (10) par grattage laser ;
- pose d'un troisième revêtement recouvrant des zones où l'on a retiré une partie de des couches de peinture composant les premier revêtement (30) second revêtement (40).

## Patentansprüche

1. Karosserieteil (10) für ein Kraftfahrzeug, aufweisend:
- ein transparentes oder lichtdurchlässiges Element (20) mit einer ersten Oberfläche (22), die dazu eingerichtet ist, der Außenseite des Fahrzeugs zugewandt zu sein, und einer zweiten Oberfläche (24), die der ersten Oberfläche (22) gegenüberliegt, wobei die zweite Oberfläche (24) mindestens einen erhabenen Bereich (26) und einen nicht erhabenen Bereich (28) umfasst;
- mindestens eine erste Beschichtung (30), die zumindest teilweise von dem erhabenen Bereich (26) abwesend ist und den nicht erhabenen Bereich (28) des transparenten oder lichtdurchlässigen Elements (20) bedeckt, **dadurch gekennzeichnet, dass** sie umfasst:
- mindestens eine zweite Beschichtung (40), die die erste Beschichtung (30) und den erhabenen Bereich (26) bedeckt, wobei die zweite Beschichtung (40) eine Farbe hat, die sich von der Farbe der ersten Beschichtung (30) unterscheidet.

2. Karosserieteil (10) nach dem vorhergehenden Anspruch, wobei mindestens eine der ersten Beschichtung (30) und der zweiten Beschichtung (40) eine Farbschicht ist.

3. Karosserieteil nach dem vorhergehenden Anspruch, wobei die erste Beschichtung (30) und die zweite Beschichtung (40) Farbschichten sind.

4. Karosserieteil (10) nach einem der vorhergehenden Ansprüche, wobei die erste Beschichtung (30) zwischen der zweiten Beschichtung (40) und der zweiten Oberfläche (24) des transparenten oder lichtdurchlässigen Elements (20) eingekapselt ist.

5. Karosserieteil (10) nach einem der vorhergehenden Ansprüche, wobei die erste Beschichtung den nicht erhabenen Bereich (28) vollständig bedeckt.

6. Karosserieteil (10) nach einem der vorhergehenden Ansprüche, wobei das Karosserieteil (10) einen Hauptkörper aus Kunststoff umfasst, in den das transparente oder lichtdurchlässige Element (20) eingeformt ist.

7. Vorderseite eines Kraftfahrzeugs, die ein Karosserieteil (10) nach einem der vorhergehenden Ansprüche aufweist.

8. Kraftfahrzeug, aufweisend einen Karosserieteil (10) nach einem der Ansprüche 1 bis 6.

9. Verfahren zur Herstellung eines Karosserieteils eines Kraftfahrzeugs nach einem der Ansprüche 1 bis 6, umfassend die Schritte:
- Spritzgießen des transparenten oder lichtdurchlässigen Elements (20);
- Aufbringen der ersten Beschichtung (30) auf die gesamte zweite Oberfläche (24) des transparenten oder lichtdurchlässigen Elements (20);
- Entfernen eines Teils der ersten Beschichtung (30), der sich in den erhabenen Bereich (26) befindet;
- Aufbringen der zweiten Beschichtung (40) auf den erhabenen Bereich (26) und die erste Beschichtung (30).

10. Verfahren nach dem vorhergehenden Anspruch, wobei das Aufbringen der ersten Beschichtung (30) durch Aufsprühen einer Farbschicht auf die zweite Oberfläche (24) des transparenten oder lichtdurchlässigen Elements (20) erfolgt.

11. Verfahren nach dem vorhergehenden Anspruch, wobei das Entfernen eines Teils der ersten Beschichtung durch Laserschaben erfolgt.

12. Verfahren nach dem vorhergehenden Anspruch, weiter umfassend die folgenden Schritte:
- Entfernen eines Teils der Farbschichten, aus denen die erste Beschichtung (30) und die zweite Beschichtung (40) des Karosserieteils (10), durch Laserabkratzen;
- Aufbringen einer dritten Beschichtung, die Bereiche bedeckt, in denen ein Teil der Farbschichten entfernt wurde, aus denen die erste Beschichtung (30) und die zweite Beschichtung (40) bestehen.

## Claims

1. Body part (10) for a motor vehicle, comprising:
- a transparent or translucent element (20) comprising a first surface (22) intended to be turned outwards of the vehicle, and a second surface (24) opposite to the first surface (22), said second surface (24) comprising at least one relief area (26) and a non-relief area (28);
- at least one first coating (30) being at least partly absent from the relief area (26) and covering the non-relief area (28) of the transparent or translucent element (20); **characterized in that** it includes:
- at least one second coating (40) covering the first coating (30) and the relief area (26), the second coating (40) having a colour different from the colour of the first coating (30).

2. Body part (10) according to the preceding claim wherein at least one of the first coating (30) and second covering (40) is a coat of paint.

3. Body part according to the preceding claim wherein the first coating (30) and second coating (40) are layers of paint.

4. Body part (10) according to one of the preceding claims wherein the first coating (30) is encapsulated between the second coating (40) and the second surface (24) of the transparent or translucent element (20).

5. Body part (10) according to one of the preceding claims wherein the first coating completely covers the non-embossed area (28).

6. Body part (10) according to one of the preceding claims which further comprises a main body of plastic material in which the transparent or translucent element is overmolded (20).

7. Front face of a motor vehicle which comprises a body part (10) according to one of the preceding claims.

8. Motor vehicle equipped with a body part (10) according to one of claims 1 to 6.

9. A method of manufacturing a body part (10) of a motor vehicle according to one of claims 1 to 6 **characterized in that** it comprises the steps of:
- injection molding of the transparent or translucent element (20);
- installation of the first coating (30) on the entire second surface (24) of the transparent or translucent element (20);
- removal of part of the first coating (30) located on the relief area (26);
- installation of the second coating (40) on the relief area (26) and the first coating (30).

10. Method of manufacturing according to the preceding claim wherein the laying of the first coating (30) is carried out by spraying a layer of paint on the second surface (24) of the transparent or translucent element (20).

11. Manufacturing method according to the preceding claim wherein the removal of part of the first coating is carried out by laser scraping.

12. Manufacturing method according to the preceding claim which further comprises the steps of:
- removal of part of the paint layer composing the first coating (30) and the second coating (40) of the body part (10) by laser scraping;
- laying of a third coating covering areas where part of the paint layers of the first coating (30) second coating (40) has been removed.
